# EUROPÄISCHE PATENTANMELDUNG

(11) **EP 0 780 188 A1**
(43) Veröffentlichungstag der Anmeldung: **25.06.1997**
(21) Anmeldenummer: 96810852.2
(22) Anmeldetag: 06.12.1996
(51) Int. Cl.: B23K 15/00

(54) **Platine aus Aluminium zur Herstellung von Blechformteilen**

(30) Priorität: 19.12.1995 CH 3585/95
(71) Anmelder: Alusuisse Technology & Management AG, 8212 Neuhausen am Rheinfall (CH)
(72) Erfinder: Bassi, Corrado, 3968 Veyras (CH)

(57) **Zusammenfassung**

Bei einer zur Herstellung von Blechformteilen geeigneten Platine aus mindestens zwei zusammengeschweissten Blechen aus Aluminium oder Aluminiumlegierungen sind die Bleche durch eine Elektronenstrahlschweissung verbunden.

Mit dem Einsatz der Elektronenstrahl-Schweisstechnologie wird die Porosität in der Schweissnaht vermindert. Dadurch wird eine höhere Dehnung in der Schweissnaht erreicht. Ein weiterer Vorteil liegt in der gegenüber andern Verfahren wesentlich höheren Schweissgeschwindigkeit.

## Beschreibung

Die Erfindung betrifft eine Platine aus mindestens zwei zusammengeschweissten Blechen aus Aluminium oder Aluminiumlegierungen zur Herstellung von Blechformteilen. Im Rahmen der Erfindung liegt auch ein Verfahren zur Herstellung einer Platine sowie deren Verwendung.

Platinen werden zur Herstellung von Blechformteilen eingesetzt, wobei die Umformung beispielsweise durch Tiefziehen erfolgen kann. Aus dem Artikel "Tailored Blanks -- eine neue Technologie im Automobilleichtbau" von K. Siegert und E. Knabe in Blech Rohre Profile 42 (3), 161 bis 164, März 1995, ist bekannt, dass Platinen bzw. "Tailored Blanks" aus Stahl oder Aluminium wesentliche Vorteile für den Automobilkonstrukteur bieten.

Zur Herstellung von Tailored Blanks aus Aluminiumwerkstoffen sind im Vortragsmanuskript von M. Hibben et al., "Aluminium Tailored Blanks", 5. Internationaler Kongress der European Automobile Engineers Cooperation, Strassburg, 21.- 23. Juni 1995 mit der Laser-Schweissung und der TIG-Schweissung spezifisch zwei Verfahren offenbart.

Als nachteilig bei der Laser-Schweissung hat sich die relativ geringe Dehnung erwiesen, die bei einer Schweissung ohne Zusatzdraht typisch bei etwa 4 bis 5% liegt. Die geringe Dehnung ist die Folge einer hohen Dichte an Gefügefehlern, insbesondere einer hohen Porendichte. Ein wesentlicher Nachteil der TIG-Schweissung wird in der relativ geringen Schweissgeschwindigkeit gesehen.

Angesichts dieser Gegebenheiten hat sich der Erfinder die Aufgabe gestellt, eine Platine der eingangs erwähnten Art sowie ein geeignetes Herstellungsverfahren zu schaffen, mit welchen die Nachteile des Standes der Technik vermieden werden können.

Zur erfindungsgemässen Lösung der Aufgabe führt, dass die Bleche durch eine Elektronenstrahlschweissung verbunden sind.

Insbesondere zur Herstellung von Blechformteilen für den Karosseriebau sind Platinen bevorzugt, deren Bleche aus einer Legierung der Reihe AA5xxx (AlMg), AA6xxx (AlMgSi) oder AA7xxx (AlZnMg) bestehen, wobei die einzelnen Bleche der Platine aus unterschiedlichen Werkstoffen zusammengesetzt sein können. Ebenso können die Bleche unterschiedliche Dicken aufweisen.

Bei der Herstellung der Platinen mittels Elektronenstrahlschweissung kann der Elektronenstrahl entlang der auszuführenden Schweissnaht bewegt werden, oder die miteinander zu verbindenden Bleche werden unter einem stehenden Elektronenstrahl durchgeführt.

Zur Schweissung kann ein beispielsweise in Drahtform vorliegender Zusatzwerkstoff verwendet werden.

Bei einer vorteilhaften Weiterbildung des erfindungsgemässen Verfahrens werden die Bleche vor der Schweissung stumpf zusammengestossen, wobei ein ggf. verbleibender Spalt durch eine mechanische Verformung geschlossen wird. Nach erfolgter Schweissung kann die Schweissnaht vorzugsweise durch Einglätten mechanisch nachbearbeitet werden.

Zur Reduktion der als Folge der Schweissung aufgebauten inneren Spannungen kann es zweckmässig sein, die Platine einer Glühung in einem Temperaturbereich von 100 bis 400°C während 0,1 bis 10 h zu unterziehen.

Das Zusammenschweissen der Bleche zur Platine kann im weich- bzw. lösungsgeglühten Zustand erfolgen, wobei die Platine nachfolgend in diesem Zustand zu einem Blechformteil umgeformt wird. Die geschweisste Platine kann aber auch vor der Umformung zu einem Blechformteil weich- bzw. lösungsgeglüht werden.

Nach der Umformung der Platine zum Blechformteil ist eine weitere Festigkeitssteigerung durch eine Wärmebehandlung möglich; diese kann z.B. im Rahmen einer Lackeinbrennglühung erfolgen.

Nach einer Variante des erfindungsgemässen Verfahrens ist auch die kontinuierliche Herstellung von Platinen bzw. eines Platinenbandes möglich. Hierzu werden die Bleche als parallel geführte Walzbänder durch die Elektronenstrahlschweissung kontinuierlich zu einem Platinenband verbunden, aus welchem später die einzelnen Platinen geschnitten oder ausgestanzt werden können.

Das Verfahren zur kontinuierlichen Fertigung eines Platinenbandes aus Walzbändern ist insbesondere zur Herstellung hoher Stückzahlen von Platinen mit gerader Schweissnaht geeignet. Mit der kontinuierlichen Fertigung von Platinenbändern als Vormaterial zur Herstellung von Platinen lassen sich die Platinen auf äusserst wirtschaftliche Weise herstellen.

Die erfindungsgemässen Platinen eignen sich insbesondere für Tiefziehanwendungen bei der Herstellung von Karosserieblechen im Automobilbau.

Für die Herstellung tiefgezogener Karosserieteile werden Platinen aus zwei oder mehr Blechen unterschiedlicher Dicke eingesetzt. Gerade für diesen Anwendungsbereich ist die kontinuierliche Fertigung von Platinenbändern aus wirtschaftlichen Gründen besonders interessant. Es ist ohne weiteres möglich, zwei, drei oder vier Coils mit unterschiedlicher Banddicke in einem einzigen Verfahrensschritt durch die Elektronenstrahlschweissung kontinuierlich zu einem Platinenband zusammenzufügen und das derart hergestellte Platinenband wiederum kontinuierlich zu einem Coil aufzuwickeln.

Die wesentlichen Vorteile des kontinuierlichen Herstellungsverfahrens sind:
- Durch Schweissen unter Vakuum ergibt sich eine sehr geringe Porosität sowie eine sehr schmale Wärmeeinflusszone in der Schweissnaht. Wesentlich für das Tiefziehen von Karosserieblechen ist zudem die Tatsache, dass bei dieser Verfahrensführung eine hohe Dehnung in der Schweissnaht erreicht wird.
- Da ohne Schweisszusatzwerkstoff geschweisst wird, kann der Schweissvorgang sehr viel schneller durchgeführt werden, womit sich eine gegenüber konventioneller Platinenherstellung wesentlich höhere Produktivität ergibt.
- Die Fertigungskosten sind wesentlich niedriger als die Kosten bei der Herstellung konventioneller Platinen, bei der jeweils einzelne Bleche unter Verwendung eines Schweisszusatzwerkstoffes miteinander verbunden werden.

Zusammenfassend kann gesagt werden, dass die kontinuierliche Fertigung von Platinenbändern durch das Zusammenfügen verschiedener Coils mittels Elektronenstrahlschweissen gegenüber der konventionellen Fertigung von Platinen einfacher, schneller und wesentlich wirtschaftlicher ist.

Weitere Vorteile, Merkmale und Einzelheiten der Erfindung ergeben sich aus der nachfolgenden Beschreibung eines Ausführungsbeispiels.

3 mm dicke Bleche aus einer AlMg5Mn-Legierung wurden mittels eines Elektronenstrahls ohne Zusatzdraht stumpfgeschweisst. An üblichen Zugproben wurden im Grundmaterial und in der Schweissnaht die folgenden mechanischen Festigkeitswerte gemessen:

| | **Rm** | **Rp0.2** | **A10** |
|---|---|---|---|
| | **(MPa)** | **(MPa)** | **(%)** |
| Grundmaterial | 284 | 165 | 20.0 |
| Schweissnaht | 275 | 162 | 11.1 |

Die Messwerte zeigen deutlich, dass bei Zugproben über die Schweissnaht die erreichte Dehnung wesentlich verbessert wird.

Die Elektronenstrahlschweissnaht zeigt auch keine Gefügefehler, insbesondere keine Porosität. Darüberhinaus ist die Schweissgeschwindigkeit mit 10 bis 15 m/min wesentlich höher als bei der Laser- bzw. TIG-Schweissung.

Bei der Umformung von Realteilen mit einer Elektronenschweissnaht hat sich zudem gezeigt, dass der Werkstoff -- unabhängig von der Lage der Schweissnaht -- im Grundmaterial, d.h. neben der Schweissnaht versagt.

Ingesamt kann festgestellt werden, dass mit dem Einsatz der Elektronenstrahl-Schweisstechnologie die den bisher zur Herstellung von Tailored Blanks eingesetzten Schweissverfahren anhaftenden Nachteile vermieden werden.

## Patentansprüche

1. Platine aus mindestens zwei zusammengeschweissten Blechen aus Aluminium oder Aluminiumlegierungen zur Herstellung von Blechformteilen,
dadurch gekennzeichnet,
dass die Bleche durch eine Elektronenstrahlschweissung verbunden sind.

2. Platine nach Anspruch 1, dadurch gekennzeichnet, dass die Bleche unterschiedliche Dicken aufweisen.

3. Platine nach Anspruch 1 oder 2, dadurch gekennzeichnet, dass die Bleche aus einer Legierung der Reihe AA5xxx (AlMg), AA6xxx (AlMgsi) oder AA7xxx (AlZnMg) bestehen.

4. Platine nache einem der Ansprüche 1 bis 3, dadurch gekennzeichnet, dass die Bleche aus unterschiedlichen Werkstoffen bestehen.

5. Verfahren zur Herstellung einer Platine aus mindestens zwei unter Bildung einer Schweissnaht zusammengeschweissten Blechen aus Aluminium oder Aluminiumlegierungen für die Umformung zu Blechformteilen,
dadurch gekennzeichnet,
dass die Bleche durch eine Elektronenstrahlschweissung verbunden werden.

6. Verfahren nach Anspruch 5, dadurch gekennzeichnet, dass ein Elektronenstrahl entlang der auszuführenden Schweissnaht bewegt wird.

7. Verfahren nach Anspruch 5, dadurch gekennzeichnet, dass die miteinander zu verbindenden Bleche unter einem stehenden Elektronenstrahl bewegt werden.

8. Verfahren nach einem der Ansprüche 5 bis 7, dadurch gekennzeichnet, dass zur Schweissung ein Zusatzwerkstoff, insbesondere in Drahtform, verwendet wird.

9. Verfahren nach einem der Ansprüche 5 bis 8, dadurch gekennzeichnet, dass die Bleche vor der Schweissung stumpf zusammengestossen werden und ein ggf. verbleibender Spalt durch eine mechanische Verformung geschlossen wird.

10. Verfahren nach einem der Ansprüche 5 bis 9, dadurch gekennzeichnet, dass die Schweissnaht mechanisch eingeglättet wird.

11. Verfahren nach einem der Ansprüche 5 bis 10, dadurch gekennzeichnet, dass die Platine zur Reduktion der als Folge der Schweissung aufgebauten inneren Spannungen einer Glühung in einem Temperaturbereich von 100 bis 400°C während 0,1 bis 10 h unterzogen wird.

12. Verfahren nach einem der Ansprüche 5 bis 11, dadurch gekennzeichnet, dass die Bleche im weich- bzw. lösungsgeglühten Zustand geschweisst werden und die Platine in diesem Zustand zu einem Blechformteil umgeformt wird.

13. Verfahren nach einem der Ansprüche 5 bis 11, dadurch gekennzeichnet, dass die Platine vor der Umformung zu einem Blechformteil weich- bzw. lösungsgeglüht wird.

14. Verfahren nach Anspruch 12 oder 13, dadurch gekennzeichnet, dass die Platine nach der Umformung zum Blechformteil zur weiteren Festigkeitssteigerung einer Wärmebehandlung, insbesondere einer Lackeinbrennglühung, unterzogen wird.

15. Verfahren nach einem der Ansprüche 5 bis 14, dadurch gekennzeichnet, dass die Bleche als parallel geführte Walzbänder kontinuierlich zu einem Platinenband verbunden werden.

16. Verwendung einer Platine nach einem der Ansprüche 1 bis 4 oder einer mit dem Verfahren nach einem der Ansprüche 5 bis 15 hergestellten Platine für Tiefziehanwendungen bei der Herstellung von Karosserieblechen im Automobilbau.
